# DEMANDE DE BREVET EUROPEEN

(11) **EP 4 036 954 A2**
(43) Date de publication de la demande: **03.08.2022**
(21) Numéro de dépôt: 22153632.9
(22) Date de dépôt: 27.01.2022
(51) Int. Cl.: H01J 23/027, H01J 23/30, H01J 25/42

(54) **TUBE À ONDES PROGRESSIVES**

(30) Priorité: 28.01.2021 FR 2100782
(71) Demandeur: THALES, 92400 Courbevoie (FR)
(72) Inventeur: ANDRE, Frédéric, 78140 Vélizy-Villacoublay (FR)
(74) Mandataire: Marks & Clerk France

(57) **Abrégé**

Tube à ondes progressives comprenant une hélice (1) reliée par des montants (3) à une enceinte à vide (2), chaque montant (3) en matériau électriquement isolant étant recouvert d'un matériau électriquement conducteur (10) de conductivité électrique comprise entre 1000 et 100000 S.m-1, sur une partie du montant (3) s'étendant de l'extrémité du montant reliée à l'hélice (1) vers l'extrémité du montant reliée à l'enceinte à vide (2) correspondant à une hauteur comprise entre 10% et 50% du montant.

## Description

La présente invention concerne un tube à ondes progressives.

Le domaine de l'invention est celui des tubes à ondes progressives, d'acronyme TOP.

Les antennes actives pour satellite géostationnaire ou plus généralement pour systèmes de télécommunication hyperfréquence les plus récents reposent sur le rayonnement d'un nombre élevé de sources hyperfréquences (typiquement 150 à 200) dont les phases et des amplitudes sont contrôlées afin que leur recombinaison spatiale forme des faisceaux de taille et de direction données, tout en minimisant la génération de signaux parasites (spatialement et en fréquence).

Cette nouvelle architecture d'antenne peut utiliser des tubes à ondes progressives comme amplificateur de puissance. Il est connu l'antenne Quantum d'ADS (divulguée notamment sur adresses électroniques suivantes : https://www.airbus.com/newsroom/press-releases/en/2019/11/airbus-presents-groundbreaking-technology-for-eutelsat-quantum.html ; https://www.esa.int/Applications/Telecommunications_Integrated_Application s/Quantum; ou https://www.broadbandtvnews.com/2019/11/22/airbus-presents-active-antenna-for-eutelsat-quantum/) utilise des tubes à ondes progressives conventionnels. Ces tubes à ondes progressives sont montés sur le panneau du satellite, avec une distance minimale entre les tubes à ondes progressives de 80 mm en raison des perturbations magnétiques qu'ils induisent les uns sur les autres. La puissance HF est transmise vers le réseau phasé par de grandes longueurs de guide d'onde. Deux tubes à ondes progressives sont alimentés par une même alimentation électrique ou EPC pour acronyme de "Electronic Power Conditionner" en langue anglaise, pour réduire les coûts. Ces tubes à ondes progressives à quatre étages de collecteur ont un très fort rendement électrique mais un encombrement et un coût de fabrication très élevé.

En raison de la distance minimale de 80 mm entre les tubes à ondes progressives il n'est pas possible de les assembler en une matrice compacte qui se trouverait directement derrière les éléments rayonnants de l'antenne. Par conséquent il faut déporter les tubes loin de l'antenne. Les guides d'onde reliant les tubes à ondes progressives à l'antenne sont longs, ce qui provoque de fortes pertes hyperfréquence de propagation (typiquement 1 à 2 dB) et un surcroit de masse.

Un but de l'invention est de proposer un tube à ondes progressives adapté à ce type d'antenne et système de télécommunication hyperfréquence en général, de dimension fortement réduite de manière à rentrer dans la maille de l'antenne dont les dimensions sont liées à la physique de la recombinaison spatiale, typiquement 1 à 2,5 longueurs d'onde entre les sources au maximum (soient 35 mm pour les bandes de fréquence Ku et Ka), avec un rendement suffisamment élevé car le montage des tubes en matrice très compacte rends difficile son refroidissement, et de complexité limitée de manière à réduire fortement le coût de réalisation (typiquement d'un facteur 2) par rapport à un tube à ondes progressives conventionnel en raison du grand nombre de sources.

L'invention porte sur un tube à ondes progressives optimisé pour une application de télécommunication hyperfréquence et plus particulièrement une antenne active, comme pour un satellite de télécommunication.

Un but de l'invention est de pallier les problèmes précédemment cités.

Aussi, il est proposé, selon un aspect de l'invention, un tube à ondes progressives comprenant une hélice reliée par des montants à une enceinte à vide, chaque montant en matériau électriquement isolant étant recouvert d'un matériau électriquement conducteur, de conductivité électrique comprise entre 1000 et 100000 S.m-1, sur une partie du montant s'étendant de l'extrémité du montant reliée à l'hélice vers l'extrémité du montant reliée à l'enceinte à vide correspondant à une hauteur comprise entre 10% et 50% du montant.

Ce dépôt conducteur est un atténuateur hyperfréquence, dont l'épaisseur est progressive en fonction de la position le long de l'axe de l'hélice, avec, par exemple un profil qui peut être typiquement gaussien.

Un tel tube à ondes progressives permet d'améliorer le rendement d'un TOP à même coût de fabrication, et permet de mettre un grand nombre de tubes sur la même EPC tout en permettant un réglage individuel des tensions d'hélice qui soit économique. Il permet également de réduire d'un facteur deux les tensions de fonctionnement du tube, permettant d'utiliser des sous-ensembles canon et collecteur plus compacts et moins chers.

Dans un mode de réalisation, ladite hauteur correspond à 1/3 du montant.

Une telle valeur est optimale, comme compromis entre l'efficacité d'atténuation et la distance d'isolement de la haute tension. Cela correspond à une distance de l'hélice à laquelle le champ électromagnétique est du même ordre de grandeur que le champ à proximité de l'hélice.

Selon un mode de réalisation, le matériau conducteur est du graphite ou un absorbant RF comprenant du graphite et du carbure de silicium ou un absorbant RF comprenant du carbure de silicium.

L'utilisation de tels matériaux conducteurs permet de minimiser la longueur du montant recouverte de matériau conducteur.

Dans un mode de réalisation, le tube à ondes progressives comprend quatre collecteurs.

Plus le nombre d'étages ou collecteurs est élevé, meilleur est le rendement électrique, mais le collecteur résultant devient plus cher et plus complexe. Le gain par étage se réduit aussi avec beaucoup d'étages. Le choix de quatre étages ou collecteurs est un excellent compromis pour un tube à ondes progressives.

Selon un mode de réalisation, les quatre collecteurs ont pour potentiels électriques respectifs, par rapport à la masse, du plus proche de l'hélice au plus éloigné de l'hélice (1), 0 kV, -0,5 kV, -1 kV, et -1,5 kV.

Ces tensions électriques obtenues sont progressives en fonction de la vitesse de l'électron le plus lent du faisceau et la vitesse du plus rapide, et sont choisies pour maximiser le rendement électrique tout en évitant le flux parasite d'électrons non collectés retournant vers la ligne à retard.

Dans un mode de réalisation, l'hélice a pour potentiel électrique 2 kV par rapport à la masse.

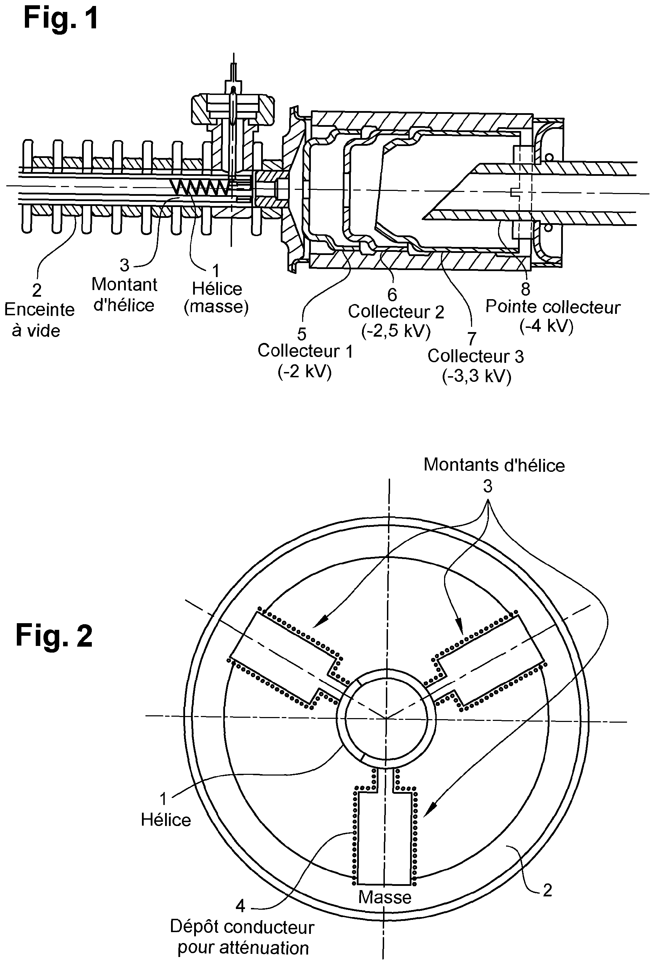

C'est l'opposée de la tension du collecteur 1, référencé 5 sur la figure 1, du TOP de l'état de l'art de la figure 1, sans polariser l'hélice selon la présente invention.

Dans un mode de réalisation, la différence de potentiel entre la cathode et l'hélice est de 4 kV.

Le choix de cette tension est le meilleur compromis entre la facilité de focalisation du faisceau et la performance hyperfréquence.

Selon un mode de réalisation, le tube à ondes progressives comprend une pointe de collecteur à un potentiel électrique de -2 kV par rapport à la masse.

Il est également proposé, selon un autre aspect de l'invention, une antenne active pour système de télécommunication hyperfréquence comprenant au moins 50 sources hyperfréquences à phases et amplitudes contrôlées, dans laquelle un ensemble d'une ou deux sources comprend un tube à ondes progressives tel que précédemment décrit pour amplifier sa puissance, et un bloc DC en technologie de ligne coplanaire sur plaque d'alumine.

Il est également proposé, selon un autre aspect de l'invention, un satellite géostationnaire comprenant au moins une antenne active telle que précédemment décrit.

L'invention sera mieux comprise à l'étude de quelques modes de réalisation décrits à titre d'exemples nullement limitatifs et illustrés par les dessins annexés sur lesquels :
[Fig.1] illustre schématiquement une vue en coupe longitudinale d'un tube à ondes progressives, selon l'état de la technique;
[Fig.2] illustre schématiquement une vue en coupe transversale d'un tube à ondes progressives, selon l'état de la technique;
[Fig.3] illustre schématiquement une vue en coupe longitudinale d'un tube à ondes progressives, selon un aspect de l'invention;
[Fig.4] illustre schématiquement une vue en coupe transversale d'un tube à ondes progressives, selon un aspect de l'invention;
[Fig.5] illustre schématiquement des potentiels par rapport à la masse électrique du tube en différents points de différents éléments du tube à ondes progressives, selon un aspect de l'invention; et
[Fig.6] illustre schématiquement la comparaison entre l'architecture d'un tube à ondes progressives de l'état de l'art et l'architecture d'un tube à ondes progressives selon un aspect de l'invention.

Sur l'ensemble des figures, les éléments ayant des références identiques sont similaires.

Dans la présente description, les modes de réalisation décrits sont nullement limitatifs, et les caractéristiques et fonctions bien connues de l'homme du métier ne sont pas décrites en détails.

Sur la figure 1 est illustré une vue en coupe longitudinale d'un tube à ondes progressives selon l'état de l'art, et sur la figure 2 est illustré une vue en coupe transversale du tube à ondes progressives de la figure 1.

Dans un tube à ondes conventionnel, une hélice 1 est isolée de la masse électrique, i.e. d'une enceinte à vide 2 par des montants 3 pour des raisons hyperfréquences. A l'intérieur du tube à ondes progressives, dans l'enceinte à vide 2, seuls des dépôts d'une couche de conducteur 4, pour atténuer les ondes RF sur les montants 3 de l'hélice 1 mettent l'hélice 1 à la masse. Ces couches ou dépôts d'atténuation ou atténuateurs 4 sont formés par un dépôt de graphite, ou absorbeur des ondes HF, déposé localement sur les montants de l'hélice 1.

Un tel tube à ondes progressives conventionnel comprend généralement un premier collecteur 5 à un potentiel électrique de -2 kV par rapport à la masse, un deuxième collecteur 6 à un potentiel électrique de -2,5 kV par rapport à la masse, un troisième collecteur 7 à un potentiel électrique de -3,3 kV par rapport à la masse, et une pointe de collecteur à un potentiel électrique de -4 kV par rapport à la masse.

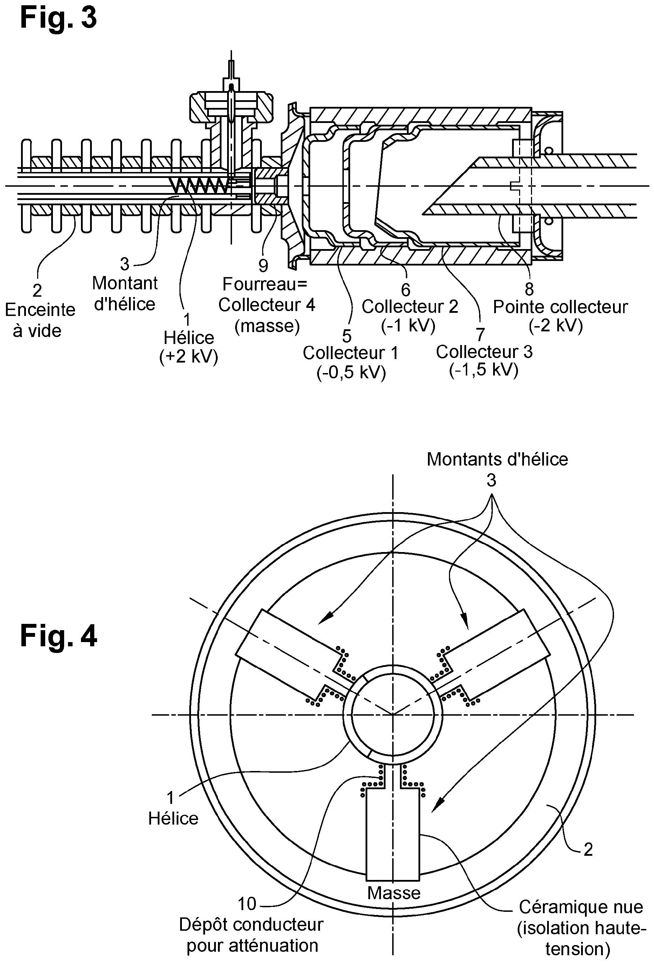

Sur la figure 3 est illustré une vue en coupe longitudinale d'un tube à ondes progressives selon l'état de l'art, et sur la figure 4 est illustré une vue en coupe transversale du tube à ondes progressives de la figure 3.

La présente invention ajoute un quatrième collecteur 9, en l'espèce le fourreau du tube à ondes progressives, ce qui augmente fortement le rendement électrique.

En outre, chaque montant 3 de l'hélice 1 en matériau électriquement isolant, est recouvert d'un matériau électriquement conducteur, de conductivité électrique comprise entre 1000 et 100000 S.m-1, sur une partie du montant s'étendant de l'extrémité du montant 3 reliée à l'hélice 1 vers l'extrémité du montant 3 reliée à l'enceinte à vide correspondant à une hauteur comprise entre 10% et 50% du montant 3, et de manière préférentielle à 1/3 du montant.

Le matériau conducteur peut être du graphite ou un absorbant RF comprenant du graphite et du carbure de silicium ou un absorbant RF comprenant du carbure de silicium.

Le tube à ondes progressives comprend quatre collecteurs 9, 5, 6, 7, qui ont pour potentiels électriques respectifs, par rapport à la masse, du plus proche de l'hélice (1) au plus éloigné de l'hélice (1), 0 kV, -0,5 kV, -1 kV, et - 1,5 kV.

L'hélice (1) a pour potentiel électrique 2 kV. Le tube à ondes progressives comprend une pointe de collecteur a un potentiel électrique de - 2 kV.

Ainsi, la présente invention permet d'avoir un tube à ondes progressives qui divise la tension de fonctionnement conventionnelle par un facteur deux environ, ce qui permet d'utiliser des sous-ensembles canon et collecteur moins chers, moins volumineux et moins lourds car dimensionnés pour une tension plus basse.

Un tel tube à ondes progressives permet un ajustement individuel des tensions d'hélice des tubes, ce qui permet de monter plus de deux tubes sur une même alimentation électrique sans perte de performances.

Un tel tube à ondes progressives permet également d'utiliser un connecteur à haute tension électrique de plus petite taille pour alimenter le tube (en bout de câble à haute tension).

L'invention permet de polariser l'hélice 1 à un potentiel supérieur à la masse (environ la moitié du potentiel de polarisation de la cathode VK d'un tube à ondes progressives conventionnel. Les tensions dans l'ensemble de collecteurs 5, 6, 7, 9 et le canon à électrons sont alors réduites d'un facteur d'environ 2.

De plus, le corps (ou fourreau) du tube à ondes progressives étant à un potentiel inférieur à celui de l'hélice 1, il fait office de collecteur 9 déprimé disposé en amont des trois autres collecteur 5, 6, 7. Ceci ajoute un étage de dépression pour un nombre d'électrodes inchangé dans l'ensemble de collecteurs. Le rendement électrique est donc accru sans augmentation de coût pour le tube et dans le même encombrement.

L'alimentation électrique utilisée doit fournir une tension électrique supplémentaire pour polariser l'hélice 1. Cependant l'hélice 1 intercepte un courant très faible, de l'ordre du milliampère, ce qui simplifie cette alimentation. L'alimentation électrique peut alors délivrer autant de tensions électriques individuelles que de tubes à ondes progressives qui lui sont connectés, ce qui permet un réglage individuel des tensions électriques d'hélice 1 qui ne serait pas viable pour un tube à ondes progressives conventionnel.

Dans un tube à ondes progressives conventionnel l'hélice 1 est isolée de la masse électrique par ses montants 3 pour des raisons hyperfréquences. A l'intérieur du tube (dans l'enceinte à vide 2), seuls les atténuateurs mettent l'hélice à la masse. Ces atténuateurs sont formés d'un dépôt ou couche de graphite, qui absorbe des ondes à hautes fréquences, déposé localement sur les montants 3 d'hélice 1.

Dans la présente invention, on ne dépose un matériau électriquement conducteur 10, de conductivité électrique comprise entre 1000 et 100000 S.m-1, seulement sur une partie du montant 3 s'étendant de l'extrémité du montant reliée à l'hélice 1 vers l'extrémité du montant reliée à l'enceinte à vide 2 correspondant à une hauteur comprise entre 10% et 50% du montant 3, et préférentiellement à une hauteur correspondant à 1/3 du montant.

Sur l'exemple représenté sur la figure 4, les montants 3 d'hélice 1 se rétrécissent à proximité de l'hélice 1.

Ce matériau 10 tel du graphite déposé uniquement sur la partie des montants 3 à proximité de l'hélice, là où l'onde hyperfréquences est présente, ce qui garantit sa fonction de dissipation de l'onde. Le reste des montants 3 est dépourvu de graphite, ce qui permet l'isolation électrique sur une hauteur de l'ordre de 1 mm. Cette distance d'isolement est suffisante pour isoler au moins 2 à 3 kV. A l'extérieur du tube, la transition entre la sortie coaxiale et le guide d'onde permet une isolation électrique grâce à une transition de type "antenne rayonnante" classique.

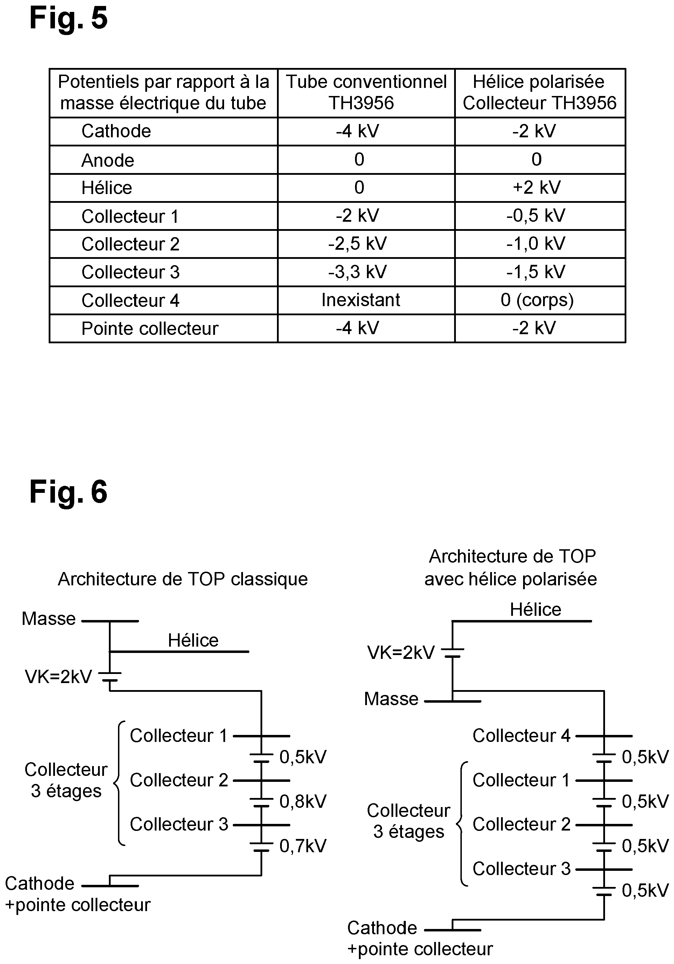

La figure 5 représente un tableau comparatif de tensions électriques entre un tube à ondes progressives de l'état de l'art et un tube à ondes progressives selon un aspect de l'invention.

La figure 6 représente un comparatif entre l'architecture d'un tube à ondes progressives de l'état de l'art et l'architecture d'un tube à ondes progressives selon un aspect de l'invention.

Il est également proposé une antenne pour système de télécommunication hyperfréquence, tel un satellite géostationnaire, comprenant au moins 50 sources hyperfréquences à phases et amplitudes contrôlées, dans laquelle un ensemble d'une ou deux sources comprend un tube à ondes progressives tel que précédemment décrit pour amplifier sa puissance, et un bloc DC en technologie de ligne coplanaire sur plaque d'alumine.

Un tel DC bloc permet d'amener le signal RF sur l'hélice tout en garantissant l'isolation électrique qui permet de polariser l'hélice à une haute-tension. Il est nécessaire car l'équipement de l'utilisateur est à la masse électrique.

Le DC bloc permet de propager le signal RF depuis l'accès de l'utilisateur (par exemple un connecteur SMA) jusqu'à l'hélice, de mettre l'accès de l'utilisateur à la masse, et de polariser l'hélice à une haute-tension

Ce type de DC-bloc peut être réalisé en technologie de ligne coplanaire sur plaquette d'alumine.

## Revendications

1. Tube à ondes progressives comprenant une hélice (1) reliée par des montants (3) à une enceinte à vide (2), chaque montant (3) en matériau électriquement isolant étant recouvert d'un matériau électriquement conducteur (10), de conductivité électrique comprise entre 1000 et 100000 S.m-1, seulement sur une partie du montant (3) s'étendant de l'extrémité du montant reliée à l'hélice (1) vers l'extrémité du montant reliée à l'enceinte à vide (2) correspondant à une hauteur comprise entre 10% et 50% du montant.

2. Tube à ondes progressives selon la revendication 1, dans lequel ladite hauteur correspond à 1/3 du montant.

3. Tube à ondes progressives selon la revendication 1 ou 2, dans lequel le matériau conducteur est du graphite ou un absorbant RF comprenant du graphite et du carbure de silicium ou un absorbant RF comprenant du carbure de silicium.

4. Tube à ondes progressives selon l'une des revendications 1 à 3, comprenant quatre collecteurs (9, 5, 6, 7).

5. Tube à ondes progressives selon la revendications 4, dans lequel les quatre collecteurs ont pour potentiels électriques respectifs, par rapport à la masse, du plus proche de l'hélice (1) au plus éloigné de l'hélice (1), 0 kV, - 0,5 kV, -1 kV, et -1,5 kV.

6. Tube à ondes progressives selon l'une des revendications précédentes, dans lequel l'hélice (1) a pour potentiel électrique 2 kV par rapport à la masse.

7. Tube à ondes progressives selon l'une des revendications précédentes, dans lequel la différence de potentiel entre la cathode et l'hélice (1) est de 4 kV.

8. Tube à ondes progressives selon l'une des revendications précédentes, comprenant une pointe (8) de collecteur à un potentiel électrique de -2 kV par rapport à la masse.

9. Antenne active pour système de télécommunication hyperfréquence comprenant au moins 50 sources hyperfréquences à phases et amplitudes contrôlées, dans laquelle un ensemble d'une ou deux sources comprend un tube à ondes progressives selon l'une des revendications précédentes pour amplifier sa puissance, et un bloc DC en technologie de ligne coplanaire sur plaque d'alumine.

10. Satellite géostationnaire comprenant au moins une antenne active selon la revendication 9.
